# EUROPEAN PATENT APPLICATION

(11) **EP 4 525 326 A1**
(43) Date of publication of application: **19.03.2025**
(21) Application number: 22941211.9
(22) Date of filing: 13.05.2022
(51) Int. Cl.: H04B 7/185

(54) **SATELLITE COVERAGE INFORMATION DETERMINATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/092843
(87) International publication number: WO 2023/216259

(57) **Abstract**

The embodiments of the present disclosure relate to a satellite coverage information determination method and apparatus, and a communication device and a storage medium. The method comprises: a user equipment (UE) receiving broadcast information from a non-terrestrial network (NTN) access network device, wherein the broadcast information carries first satellite coverage information; sending to the NTN access network device a registration request message for requesting network registration; the UE receiving a non-access stratum (NAS) message, which is sent by a core network device and is related to the network registration, which is performed by the UE, wherein the NAS message carries second satellite coverage information; and the UE determining, on the basis of the first satellite coverage information and the second satellite coverage information, third satellite coverage information to be used by the UE.

## Description

### TECHNICAL FIELD

The disclosure relates to, but is not limited to, a field of wireless communication technology, in particularly, to a method and an apparatus for determining satellite coverage information, a communication device and a storage medium.

### BACKGROUND

The 3rd Generation Partnership Project (3GPP) has approved a new study on satellite access. One objective of the study is to investigate 5th Generation Core (5GC)/evolved packet core (EPC) enhancements to support satellite access with discontinuous satellite coverage. To support power saving based on access and mobility management function (AMF) awareness of satellite coverage information, the AMF may trigger an access network (AN) release procedure to move a user equipment (UE) into a connection management idle state (CM-IDLE) and sends power saving parameters.

### SUMMARY

In view of this, embodiments of the present disclosure provide a method and an apparatus for determining satellite coverage information, a communication device and a storage medium.

According to a first aspect of embodiments of the disclosure, a method for determining satellite coverage information is provided. The method is performed by a user equipment (UE). The method includes:
receiving broadcast information from a non-terrestrial network (NTN) access network device, in which the broadcast information carries first satellite coverage information;
sending a registration request message for requesting network registration to the NTN access network device;
receiving a non-access stratum (NAS) message related to the network registration of the UE sent by a core network device, in which the NAS message carries second satellite coverage information; and
determining third satellite coverage information to be adopted by the UE based on the first satellite coverage information and the second satellite coverage information.

In an embodiment, receiving the NAS message related to the network registration of the UE sent by the core network device includes:
receiving a registration accept message carrying the second satellite coverage information sent by the core network device.

In an embodiment, determining the third satellite coverage information to be adopted by the UE based on the first satellite coverage information and the second satellite coverage information, includes one of:
in response to the first satellite coverage information being the same as the second satellite coverage information, determining the first satellite coverage information as the third satellite coverage information; or
in response to the first satellite coverage information being different from the second satellite coverage information, determining the second satellite coverage information as the third satellite coverage information.

According to a second aspect of embodiments of the disclosure, a method for determining satellite coverage information is provided. The method is performed by a core network device. The method includes:
obtaining second satellite coverage information; and
sending to a user equipment (UE) a non-access stratum (NAS) message related to network registration of the UE, in which the NAS message carries the second satellite coverage information, the second satellite coverage information is used for the UE to compare with first satellite coverage information determined by the UE from broadcast information, and to determined third satellite coverage information to be adopted by the UE based on a comparison result, and the network registration is triggered by a registration request message sent by the UE to a non-terrestrial network (NTN) access network device.

In an embodiment, sending to the UE the NAS message related to the network registration of the UE includes:
sending to the UE a registration accept message carrying the second satellite coverage information.

In an embodiment, obtaining the second satellite coverage information includes at least one of:
receiving the second satellite coverage information sent by the NTN access network device; or
obtaining the second satellite coverage information, which is pre-stored, from an operation administration and maintenance (OAM) network element.

In an embodiment, receiving the second satellite coverage information sent by the NTN access network device includes:
receiving the registration request message carrying the second satellite coverage information from the NTN access network device.

According to a third aspect of embodiments of the disclosure, a method for determining satellite coverage information is provided. The method is performed by a non-terrestrial network (NTN) access network device. The method includes:
sending broadcast information carrying fourth satellite coverage information to a user equipment (UE), in which the satellite coverage information sent to the UE is used for the UE to determine first satellite coverage information;
receiving a registration request message for requesting network registration sent by the UE; and
sending the fourth satellite coverage information to a core network device, in which sending the fourth satellite coverage information to the core network device is used for the core network device to determine second satellite coverage information, the second satellite coverage information is carried in a non-access stratum (NAS) message related to the network registration of the UE and sent by the core network device to the UE, and is used for the UE to compare with the first satellite coverage information and to determine third satellite coverage information to be adopted by the UE based on a comparison result.

In an embodiment, sending the fourth satellite coverage information to the core network device includes:
sending the registration request message carrying the fourth satellite coverage information to the core network device.

According to a fourth aspect of embodiments of the disclosure, an apparatus for determining satellite coverage information is provided. The apparatus includes:
a first transceiver module, configured to receive broadcast information from a non-terrestrial network (NTN) access network device, in which the broadcast information carries first satellite coverage information;
the first transceiver module, further configured to send a registration request message for requesting network registration to the NTN access network device;
the first transceiver module, further configured to receive a non-access stratum (NAS) message related to the network registration of the UE sent by a core network device, in which the NAS message carries second satellite coverage information; and
a first processing module, configured to determine third satellite coverage information to be adopted by the UE based on the first satellite coverage information and the second satellite coverage information.

In an embodiment, the first transceiver module is further configured to:
receive a registration accept message carrying the second satellite coverage information sent by the core network device.

In an embodiment, the first processing module is further configured to:
in response to the first satellite coverage information being the same as the second satellite coverage information, determine the first satellite coverage information as the third satellite coverage information; or
in response to the first satellite coverage information being different from the second satellite coverage information, determine the second satellite coverage information as the third satellite coverage information.

According to a fifth aspect of embodiments of the disclosure, an apparatus for determining satellite coverage information is provided. The apparatus includes:
a second transceiver module, configured to obtain second satellite coverage information; and
the second transceiver module, further configured to send to a user equipment (UE) a non-access stratum (NAS) message related to network registration of the UE, wherein the NAS message carries the second satellite coverage information; the second satellite coverage information is used for the UE to compare with first satellite coverage information determined by the UE from broadcast information; third satellite coverage information to be adopted by the UE is determined based on a comparison result; and the network registration is triggered by a registration request message sent by the UE to a non-terrestrial network (NTN) access network device.

In an embodiment, the second transceiver module is further configured to:
send to the UE a registration accept message carrying the second satellite coverage information.

In an embodiment, obtaining the second satellite coverage information includes at least one of:
receiving the second satellite coverage information sent by the NTN access network device; or
obtaining the second satellite coverage information, which is pre-stored, from an operation administration and maintenance (OAM) network element.

In an embodiment, the second transceiver module is further configured to:
receive the registration request message carrying the second satellite coverage information from the NTN access network device.

According to a sixth aspect of embodiments of the disclosure, an apparatus for determining satellite coverage information is provided. The apparatus includes:
a third transceiver module, configured to send broadcast information carrying fourth satellite coverage information to a user equipment (UE), wherein the satellite coverage information sent to the UE is used for the UE to determine first satellite coverage information;
the third transceiver module, further configured to receive a registration request message for requesting network registration sent by the UE; and
the third transceiver module, further configured to send the fourth satellite coverage information to a core network device, wherein sending the fourth satellite coverage information to the core network device is used for the core network device to determine second satellite coverage information; the second satellite coverage information is carried in a non-access stratum (NAS) message related to the network registration of the UE and sent by the core network device to the UE, and is used for the UE to compare with the first satellite coverage information and to determine third satellite coverage information to be adopted by the UE based on a comparison result.

In an embodiment, the third transceiver module is further configured to:
send the registration request message carrying the fourth satellite coverage information to the core network device.

According to a seventh aspect of embodiments of the disclosure, a communication device is provided. The communication device includes: a processor, a memory and an executable program stored in the memory and capable of being run by the processor. When the executable program is executed by the processor, steps of the method for determining satellite coverage information as described the first aspect, the second aspect or the third aspect are implemented.

According to an eighth aspect of embodiments of the disclosure, a storage medium having an executable program stored thereon is provided. When the executable program is executed by a processor, steps of the method for determining satellite coverage information as described the first aspect, the second aspect or the third aspect are implemented.

Embodiments of the disclosure provide the method and the apparatus for determining satellite coverage information, the communication device and the storage medium. The UE receives the broadcast information from the NTN access network device, in which the broadcast information carries the first satellite coverage information. The UE sends the registration request message for requesting the network registration to the NTN access network device. The UE receives the NAS message related to the network registration of the UE sent by the core network device, in which the NAS message carries the second satellite coverage information. The UE determines the third satellite coverage information to be adopted by the UE based on the first satellite coverage information and the second satellite coverage information. In this way, by comparing the first satellite coverage information with the second satellite coverage information obtained in the secure transmission manner, the UE determines whether the first satellite coverage information is correct, and then communicates with the NTN access network device based on the determined real third satellite coverage information of the satellite. Thus, communication security is improved, and a situation where the UE is misled to stop working while it is still in the actual network coverage resulted by incorrect satellite coverage information may be reduced, and a situation where the UE continues to send signals for accessing the network when it is already out of the actual network coverage, leading to unnecessary power consumptions, may be reduced.

It should be understood that the above general description and the following detailed descriptions are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and serve to explain the principles of embodiments of the disclosure together with the description.
FIG. 1 is a schematic diagram of a wireless communication system according to an embodiment.
FIG. 2 is a flowchart of a method for determining satellite coverage information according to an embodiment.
FIG. 3 is a flowchart of another method for determining satellite coverage information according to an embodiment.
FIG. 4 is a flowchart of yet another method for determining satellite coverage information according to an embodiment.
FIG. 5 is a schematic diagram of information interaction in yet another method for determining satellite coverage information according to an embodiment.
FIG. 6 is a block diagram of an apparatus for determining satellite coverage information according to an embodiment.
FIG. 7 is a block diagram of another apparatus for determining satellite coverage information according to an embodiment.
FIG. 8 is a block diagram of yet another apparatus for determining satellite coverage information according to an embodiment.
FIG. 9 is a block diagram of a device used for determining satellite coverage information according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

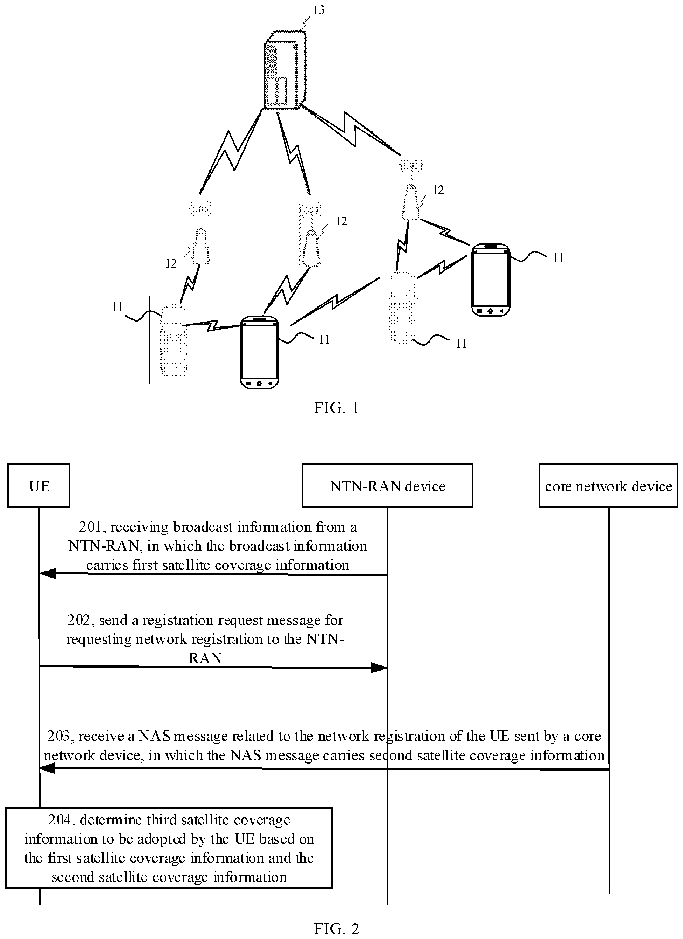

FIG. 1 is a schematic diagram illustrating a wireless communication system according to an embodiment of the disclosure. As illustrated in FIG. 1, the wireless communication system is a communication system based on cellular mobile communication technology. The wireless communication system may include: a plurality of terminals 11 and a plurality of base stations 12.

The terminal 11 may be a device that provides voice and/or data connectivity to a user. The terminal 11 may communicate with one or more core networks via a radio access network (RAN). The terminal 11 may be an Internet of Things (IoT) terminal, such as a sensor device, a cell phone (or "cellular" phone), and a computer with the IoT terminal. For example, the terminal 11 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment (UE). Or, the terminal 11 may also be an unmanned aerial vehicle device. Or, the terminal 11 may also be a vehicle-mounted device, for example, a driving computer having wireless communication function or a wireless communication device external to the driving computer. Or, the terminal 11 may also be a roadside device, for example, a street light, a signal light, or other roadside devices having the wireless communication function.

The base station 12 may be a network side device in the wireless communication system. The wireless communication system may be a 4th Generation (4G) mobile communication system, also known as a Long Term Evolution (LTE) system. Or, the wireless communication system may also be a 5G system, also known as a New Radio (NR) system or a 5G NR system. Or, the wireless communication system may be any next generation system of the 5G system. The access network in the 5G system may be called a New Generation-Radio Access Network (NG-RAN) or a machine type communication (MTC) system.

The base station 12 may be an evolved base station (eNB) employed in the 4G system. Or, the base station 12 may be a base station (gNB) with a centralized distributed architecture employed in the 5G system. When the base station 12 adopts a centralized-distributed architecture, it usually includes a central unit (CU) and at least two distributed units (DUs). The CU is equipped with protocol stacks of a Packet Data Convergence Protocol (PDCP) layer, a Radio Link Control (RLC) layer, and a Media Access Control (MAC) layer. The DU is equipped with a protocol stack of a physical (PHY) layer, and the specific implementation of the base station 12 is not limited in embodiments of the disclosure.

A wireless connection may be established between the base station 12 and the terminal 11 via a radio interface. In different implementations, the radio interface is a radio interface based on the 4G standard. Or, the radio interface is a radio interface based on the 5G standard, such as a NR. Or, the radio interface may be a radio interface based on the standard of the next generation of 5G.

In some embodiments, an End to End (E2E) connection is established between the terminals 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of base stations 12 are connected to the network management device 13 respectively. The network management device 13 may be a core network device in the wireless communication system. For example, the network management device 13 may be a Mobility Management Entity (MME) in an Evolved Packet Core (EPC). Or, the network management device may be another core network device, such as a Serving GateWay (SGW), a Public Data Network GateWay (PGW), a Policy and Charging Rules Function (PCRF), or a Home Subscriber Server (HSS), etc. The implementation form of the network management device 13 is not limited in embodiments of the disclosure.

The access and mobility management function (AMF) may detect a time when a UE is about to leave current network coverage based on satellite coverage information. The satellite coverage information may be sent to the AMF by a non-terrestrial network-radio access network (NTN-RAN) or an operation administration and maintenance (OAM) system.

The satellite coverage information is also sent by the NTN access network device to the UE via system information block (SIB) information. As the SIB information is broadcast information being unprotected, the satellite coverage information carried in the SIB information broadcast could be easily tampered by attackers. If the tampered satellite coverage information distorts actual network coverage, the distorted network coverage may mislead the UE to stop working when the UE is still in the actual network coverage, which is a denial of service (DoS) attack; or the distorted network coverage may mislead the UE to keep sending signals for accessing to the network when the UE is already out of the actual network coverage, leading to unnecessary power consumption.

Therefore, how to verify whether the satellite coverage information received by the UE is tampered or not, communicate based on correct satellite coverage information, and improve communication security are urgent issues to be solved.

As illustrated in FIG. 2, an embodiment provides a method for determining satellite coverage information. The method may be performed by a UE of a cellular mobile communication system and includes following steps.

At step 201, broadcast information is received from a non-terrestrial network (NTN) access network device, in which the broadcast information carries first satellite coverage information.

At step 202, a registration request message for requesting network registration is sent to the NTN access network device.

At step 203, a non-access stratum (NAS) message related to the network registration of the UE sent by a core network device is received, in which the NAS message carries second satellite coverage information.

At step 204, third satellite coverage information to be adopted by the UE is determined based on the first satellite coverage information and the second satellite coverage information.

This embodiment can be applied to, but is not limited to, discontinuous satellite coverage scenarios, which is not limited herein.

The NTN access network device may include a satellite or a base station, etc.in the NTN. The satellite in the NTN acts as relay to provide signals for the base station on the ground, that is, to provide signal coverage of cellular mobile communication network to the ground. Alternatively, the satellite acts as an airborne base station in the NTN for providing the signal coverage of cellular mobile communication network to the ground.

The satellite coverage information, which is also referred to as satellite signal coverage information, is used to determine coverage of satellite signals at different time points. The satellite coverage information includes, but is not limited to, at least one of: satellite ephemeris information, a center position of the coverage of satellite signals, a radius of the coverage of satellite signals, or an area of the coverage of satellite signals.

The UE may determine a location of the UE within the coverage of satellite signals based on the satellite coverage information. For example, the UE may determine a current distance to a center point of the coverage of satellite signals or a current distance to an edge of the coverage of satellite signals based on a geographical location where the UE is, the satellite ephemeris, the center position of the coverage of satellite signals, and the radius of the coverage of satellite signals. The UE may then determine whether to access the network, whether to perform data communication, and/or whether to stop data communication, etc.

The first satellite coverage information may be satellite coverage information acquired by the UE from broadcast information of the NTN access network device. The broadcast information may include, but is not limited to, system information broadcast by the NTN access network device. The system information includes, but is not limited to, SIB information. The satellite coverage information may be configured on the NTN access network device by an OAM system.

The NTN access network device may carry real satellite coverage information of the satellite, i.e., the fourth satellite coverage information, in the broadcast information and broadcast the broadcast information. Since there may be causes such as incorrect transmission and/or tampering of the broadcast system information during transmission, the fourth satellite coverage information sent by the NTN access network device may be different from the first satellite coverage information obtained by the UE from the broadcast information. That is, the first satellite coverage information may be the same as the fourth satellite coverage information carried by the NTN access network device in the broadcast information, or the first satellite coverage information may be different from the fourth satellite coverage information carried by the NTN access network device in the broadcast information.

For example, the broadcast system information is not protected from tampering, the fourth satellite coverage information carried by the NTN access network device in the broadcast information may be tampered, so that the first satellite coverage information received by the UE may be different from the fourth satellite coverage information.

The core network device may include an AMF, etc. The core network device may obtain the second satellite coverage information. The core network device may be configured to obtain the second satellite coverage information in a way of being protected, to improve reliability of the second satellite coverage information.

In an embodiment, obtaining the second satellite coverage information by the core network device includes at least one of:
receiving, the core network device, the second satellite coverage information sent by the NTN access network device; or
obtaining, by the core network device, the second satellite coverage information, which is pre-stored, from an OAM network element.

The NTN access network device may carry the fourth satellite coverage information via an N2 message, and the core network device obtains the second satellite coverage information carried from the N2 message. Since the N2 message is a message being protected, there is a higher probability that the fourth satellite coverage information is consistent with the second satellite coverage information received by the core network device. Generally, it is considered that the fourth satellite coverage information is subject to security protection during transmission, for example, encryption protection and/or integrity protection, and the second satellite coverage information received by the core network device is consistent with the fourth satellite coverage information.

The second satellite coverage information may also be pre-stored in the OAM network element, so that the core network device can directly obtain the second satellite coverage information from the OAM network element. The second satellite coverage information may be pre-stored in the OAM network element by the NTN access network device or the like.

An event of performing the network registration by the UE may trigger the core network device to send a message carrying the second satellite coverage information to the UE.

The UE may send the registration request message to the NTN access network device to request the network registration. The NTN access network device may, based on the registration request message, request the core network device (such as an AMF, etc.) to register the UE to the core network, to perform communication activities. The core network may send the second satellite coverage information to the UE during the UE performing the network registration.

The core network device may carry the second satellite coverage information in a message transmitted in a secure transmission manner. The secure transmission manner may include transmitting the message by means of encryption protection and/or integrity protection, etc. The message carrying the second satellite coverage information is a message being protected, it may be considered that the second satellite coverage information has not been tampered during the transmission process, and the second satellite coverage information may be considered as real satellite coverage information.

For example, the core network device may carry the second satellite coverage information in a NAS message and send the NAS message to the UE during the registration process of the UE. Errors during the transmission of the second satellite coverage information may be reduced due to the NAS message being the message subjected to encryption protection and/or integrity protection.

The UE may compare the first satellite coverage information with the second satellite coverage information to determine whether the received first satellite coverage information is the real satellite coverage information.

The third satellite coverage information is determined based on whether the first satellite coverage information is the real satellite coverage information. For example, if the first satellite coverage information is the real satellite coverage information, the first satellite coverage information may be determined as the third satellite coverage information. If the first satellite coverage information is not the real satellite coverage information, the second satellite coverage information may be determined as the third satellite coverage information.

The UE may determine the location of the UE within the satellite coverage based on the third satellite coverage information, and then determine whether to perform data communication and/or whether to stop data communication, etc.

In this way, by comparing the first satellite coverage information with the second satellite coverage information obtained in the secure transmission manner, the UE determines whether the first satellite coverage information is correct, and then communicates with the NTN access network device based on the determined real third satellite coverage information of the satellite. Thus, communication security is improved, and a situation where the UE is misled to stop working while it is still in the actual network coverage resulted by incorrect satellite coverage information may be reduced, and a situation where the UE continues to send signals for accessing the network when it is already out of the actual network coverage, leading to unnecessary power consumptions, may be reduced.

In an embodiment, receiving the NAS message related to the network registration of the UE sent by the core network device includes:
receiving a registration accept message carrying the second satellite coverage information sent by the core network device.

For example, during a process of the network registration of the UE, firstly, the UE sends the registration request message to the network. The registration request message may include a NTN capability of the UE. After receiving the registration request message, the NTN access network device may broadcast the fourth satellite coverage information to the UE via broadcast information (such as, system information, e.g., SIB information). The fourth satellite coverage information in the broadcast information is usually unprotected.

The UE receives the broadcast information and obtains the first satellite coverage message carried in the broadcast information. The broadcast information is unprotected, thus the first satellite coverage message may be the same as or different from the fourth satellite coverage information. The UE may store the received first satellite coverage message.

After receiving the registration request message, the NTN access network device selects an AMF and sends the registration request message to the AMF via an N2 message. Optionally, the NTN access network device may also carry the fourth satellite coverage information in the registration request message. As the N2 message is a message being protected, it is considered that the second satellite coverage information obtained by the AMF from the registration request message is consistent with the fourth satellite coverage information. The AMF may also obtain the second satellite coverage information from the OAM network element and stores the obtained second satellite coverage information.

During a process of performing a primary authentication between the UE and the network, NAS security between the UE and the AMF may be established. After successful authentication, the AMF sends the registration accept message to the UE. The registration accept message carries the second satellite coverage information stored by the AMF. Since the NAS message is subjected to security protection, the UE may receive the second satellite coverage information correctly.

By carrying the second satellite coverage information in the registration accept message, an accuracy of receiving the second satellite coverage information by the UE may be improved, and verification of the first satellite coverage information may be achieved.

In an embodiment, determining the third satellite coverage information to be adopted by the UE based on the first satellite coverage information and the second satellite coverage information includes one of:
in response to the first satellite coverage information being the same as the second satellite coverage information, determining the first satellite coverage information as the third satellite coverage information; or
in response to the first satellite coverage information being different from the second satellite coverage information, determining the second satellite coverage information as the third satellite coverage information.

For example, the UE compares the first satellite coverage information with the second satellite coverage information. If the first satellite coverage information is inconsistent with the second satellite coverage information, the UE may determine the second satellite coverage information as the third satellite coverage information. For example, the first satellite coverage information stored in the UE is cover with the second satellite coverage information. If the first satellite coverage information is consistent with the second satellite coverage information, the UE may determine the first satellite coverage information as the third satellite coverage information. For example, the first satellite coverage information may be reserved.

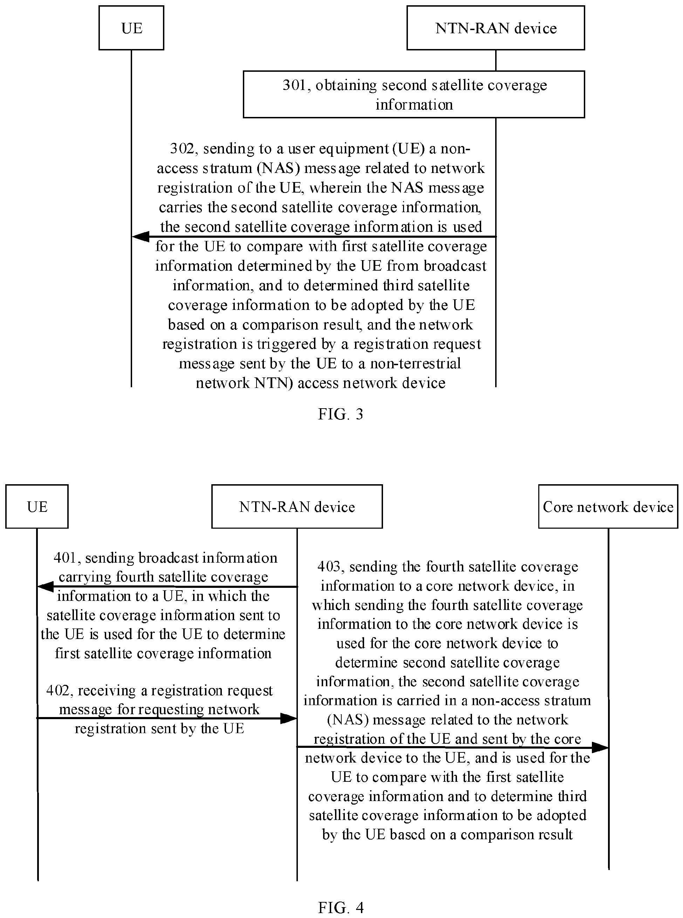

As illustrated in FIG. 3, an embodiment provides a method for determining satellite coverage information. The method may be performed by a core network device of a cellular mobile communication system, and includes following steps.

At step 301, second satellite coverage information is obtained.

At step 302, an NAS message related to network registration of a UE is sent to the UE, in which the NAS message carries the second satellite coverage information, the second satellite coverage information is used for the UE to compare with first satellite coverage information determined by the UE from broadcast information, and to determine third satellite coverage information to be adopted by the UE based on a comparison result, and the network registration is triggered by a registration request message sent by the UE to an NTN access network device.

This embodiment can be applied to, but is not limited to, discontinuous satellite coverage scenarios, which is not limited herein.

The core network device includes, but is not limited to, an AMF.

The NTN access network device may include a satellite or a base station, etc.in the NTN. The satellite in the NTN acts as relay to provide signals for the base station on the ground, that is, to provide signal coverage of cellular mobile communication network to the ground. Alternatively, the satellite acts as an airborne base station in the NTN for providing the signal coverage of cellular mobile communication network to the ground.

The satellite coverage information, which is also referred to as satellite signal coverage information, is used to determine coverage of satellite signals at different time points. The satellite coverage information includes, but is not limited to, at least one of: satellite ephemeris information, a center position of the coverage of satellite signals, a radius of the coverage of satellite signals, or an area of the coverage of satellite signals.

The UE may determine a location of the UE within the coverage of satellite signals based on the satellite coverage information. For example, the UE may determine a current distance to a center point of the coverage of satellite signals or a current distance to an edge of the coverage of satellite signals based on a geographical location where the UE is, the satellite ephemeris, the center position of the coverage of satellite signals, and the radius of the coverage of satellite signals. The UE may then determine whether to access the network, whether to perform data communication, and/or whether to stop data communication, etc.

The first satellite coverage information may be satellite coverage information acquired by the UE from broadcast information of the NTN access network device. The broadcast information may include, but is not limited to, system information broadcast by the NTN access network device. The system information includes, but is not limited to, SIB information. The satellite coverage information may be configured on the NTN access network device by an OAM system.

The NTN access network device may carry real satellite coverage information of the satellite, i.e., the fourth satellite coverage information, in the broadcast information and broadcast the broadcast information. Since there may be causes such as incorrect transmission and/or tampering of the broadcast system information during transmission, the fourth satellite coverage information sent by the NTN access network device may be different from the first satellite coverage information obtained by the UE from the broadcast information. That is, the first satellite coverage information may be the same as the fourth satellite coverage information carried by the NTN access network device in the broadcast information, or the first satellite coverage information may be different from the fourth satellite coverage information carried by the NTN access network device in the broadcast information.

For example, the broadcast system information is not protected from tampering, the fourth satellite coverage information carried by the NTN access network device in the broadcast information could be easily tampered, so that the first satellite coverage information received by the UE may be inconsistent with the fourth satellite coverage information.

The core network device may include an AMF, etc. The core network device may obtain the second satellite coverage information. The core network device may be configured to obtain the second satellite coverage information in a way of being protected, to improve reliability of the second satellite coverage information.

In an embodiment, obtaining the second satellite coverage information includes at least one of:
receiving the second satellite coverage information sent by the NTN access network device; or
obtaining the second satellite coverage information, which is pre-stored, from an OAM network element.

The NTN access network device may carry the fourth satellite coverage information via an N2 message, and the core network device obtains the second satellite coverage information carried from the N2 message. Since the N2 message is a message being protected, there is a higher probability that the fourth satellite coverage information is consistent with the second satellite coverage information received by the core network device. Generally, it is considered that the fourth satellite coverage information is subject to security protection during transmission, for example, encryption protection and/or integrity protection, and the second satellite coverage information received by the core network device is consistent with the fourth satellite coverage information.

The second satellite coverage information may also be pre-stored in the OAM network element, so that the core network device can directly obtain the second satellite coverage information from the OAM network element. The second satellite coverage information may be pre-stored in the OAM network element by the NTN access network device or the like.

An event of performing the network registration by the UE may trigger the core network device to send a message carrying the second satellite coverage information to the UE.

The UE may send the registration request message to the NTN access network device to request the network registration. The NTN access network device may, based on the registration request message, request the core network device (such as an AMF, etc.) to register the UE to the core network, to perform communication activities. The core network may send the second satellite coverage information to the UE during the UE performing the network registration.

The core network device may carry the second satellite coverage information in a message transmitted in a secure transmission manner. The secure transmission manner may include transmitting the message by means of encryption protection and/or integrity protection, etc. The message carrying the second satellite coverage information is a message being protected, it may be considered that the second satellite coverage information has not been tampered during the transmission process, and the second satellite coverage information may be considered as real satellite coverage information.

For example, the core network device may carry the second satellite coverage information in a NAS message and send the NAS message to the UE during the registration process of the UE. Errors during the transmission of the second satellite coverage information may be reduced due to the NAS message being the message subjected to encryption protection and/or integrity protection.

The UE may compare the first satellite coverage information with the second satellite coverage information to determine whether the received first satellite coverage information is the real satellite coverage information.

The third satellite coverage information is determined based on whether the first satellite coverage information is the real satellite coverage information. For example, if the first satellite coverage information is the real satellite coverage information, the first satellite coverage information may be determined as the third satellite coverage information. If the first satellite coverage information is not the real satellite coverage information, the second satellite coverage information may be determined as the third satellite coverage information.

The UE may determine the location of the UE within the satellite coverage based on the third satellite coverage information, and then determine whether to perform data communication and/or whether to stop data communication, etc.

In this way, by comparing the first satellite coverage information with the second satellite coverage information obtained in the secure transmission manner, the UE determines whether the first satellite coverage information is correct, and then communicates with the NTN access network device based on the determined real third satellite coverage information of the satellite. Thus, communication security is improved, and a situation where the UE is misled to stop working while it is still in the actual network coverage resulted by incorrect satellite coverage information may be reduced, and a situation where the UE continues to send signals for accessing the network when it is already out of the actual network coverage, leading to unnecessary power consumptions, may be reduced.

In an embodiment, sending to the UE the NAS message related to the network registration of the UE includes:
sending to the UE a registration accept message carrying the second satellite coverage information.

For example, during a process of the network registration of the UE, firstly, the UE sends the registration request message to the network. The registration request message may include a NTN capability of the UE. After receiving the registration request message, the NTN access network device may broadcast the fourth satellite coverage information to the UE via broadcast information (such as, system information, e.g., SIB information). The fourth satellite coverage information in the broadcast information is usually unprotected.

The UE receives the broadcast information and obtains the first satellite coverage message carried in the broadcast information. The broadcast information is unprotected, thus the first satellite coverage message may be the same as or different from the fourth satellite coverage information. The UE may store the received first satellite coverage message.

In an embodiment, receiving the second satellite coverage information sent by the NTN access network device includes:
receiving the registration request message carrying the second satellite coverage information from the NTN access network device.

After receiving the registration request message, the NTN access network device selects an AMF and sends the registration request message to the AMF via an N2 message. Optionally, the NTN access network device may also carry the fourth satellite coverage information in the registration request message. As the N2 message is a message being protected, it is considered that the second satellite coverage information obtained by the AMF from the registration request message is consistent with the fourth satellite coverage information. The AMF may also obtain the second satellite coverage information from the OAM network element and stores the obtained second satellite coverage information.

During a process of performing a primary authentication between the UE and the network, NAS security between the UE and the AMF may be established. After successful authentication, the AMF sends the registration accept message to the UE. The registration accept message carries the second satellite coverage information stored by the AMF. Since the NAS message is subjected to security protection, the UE may receive the second satellite coverage information correctly.

By carrying the second satellite coverage information in the registration accept message, an accuracy of receiving the second satellite coverage information by the UE may be improved, and verification of the first satellite coverage information may be achieved.

In an embodiment, determining, by the UE, the third satellite coverage information to be adopted by the UE based on the first satellite coverage information and the second satellite coverage information includes one of:
in response to the first satellite coverage information being the same as the second satellite coverage information, determining the first satellite coverage information as the third satellite coverage information; or
in response to the first satellite coverage information being different from the second satellite coverage information, determining the second satellite coverage information as the third satellite coverage information.

For example, the UE compares the first satellite coverage information with the second satellite coverage information. If the first satellite coverage information is inconsistent with the second satellite coverage information, the UE may determine the second satellite coverage information as the third satellite coverage information. For example, the first satellite coverage information stored in the UE is cover with the second satellite coverage information. If the first satellite coverage information is consistent with the second satellite coverage information, the UE may determine the first satellite coverage information as the third satellite coverage information. For example, the first satellite coverage information may be reserved.

As illustrated in FIG. 4, an embodiment provides a method for determining satellite coverage information. The method may be performed by an NTN access network device of a cellular mobile communication system, and includes following steps.

At step 401, broadcast information carrying fourth satellite coverage information is sent to a UE, in which the satellite coverage information sent to the UE is used for the UE to determine first satellite coverage information.

At step 402, a registration request message for requesting network registration sent by the UE is received.

At step 403, the fourth satellite coverage information is sent to a core network device, in which sending the fourth satellite coverage information to the core network device is used for the core network device to determine second satellite coverage information, the second satellite coverage information is carried in a NAS message related to the network registration of the UE and sent by the core network device to the UE, and is used for the UE to compare with the first satellite coverage information and to determine third satellite coverage information to be adopted by the UE based on a comparison result.

The step 401 to step 403 may be or may not be executed in sequence. For example, these steps may be executed in an order of step 401, step 403 and step 402, which is not limited here.

This embodiment can be applied to, but is not limited to, discontinuous satellite coverage scenarios, which is not limited herein.

The NTN access network device may include a satellite or a base station, etc.in the NTN. The satellite in the NTN acts as relay to provide signals for the base station on the ground, that is, to provide signal coverage of cellular mobile communication network to the ground. Alternatively, the satellite acts as an airborne base station in the NTN for providing the signal coverage of cellular mobile communication network to the ground.

The satellite coverage information, which is also referred to as satellite signal coverage information, is used to determine coverage of satellite signals at different time points. The satellite coverage information includes, but is not limited to, at least one of: satellite ephemeris information, a center location of the coverage of satellite signals, a radius of the coverage of satellite signals, or an area of the coverage of satellite signals.

The UE may determine a location of the UE within the coverage of satellite signals based on the satellite coverage information. For example, the UE may determine a current distance to a center point of the coverage of satellite signals or a current distance to an edge of the coverage of satellite signals based on a geographical location where the UE is, the satellite ephemeris, the center location of the coverage of satellite signals, and the radius of the coverage of satellite signals. The UE may then determine whether to access the network, whether to perform data communication, and/or whether to stop data communication, etc.

The first satellite coverage information may be satellite coverage information acquired by the UE from broadcast information of the NTN access network device. The broadcast information may include but is not limited to system information broadcast by the NTN access network device. The system information includes but is not limited to SIB information. The satellite coverage information may be configured on the NTN access network device by an OAM system.

The NTN access network device may carry real satellite coverage information of the satellite, i.e., the fourth satellite coverage information, in the broadcast information and broadcast the broadcast information. Since there may be causes such as incorrect transmission and/or tampering of the broadcast system information during transmission, the fourth satellite coverage information sent by the NTN access network device may be different from the first satellite coverage information obtained by the UE from the broadcast information. That is, the first satellite coverage information may be the same as the fourth satellite coverage information carried by the NTN access network device in the broadcast information, or the first satellite coverage information may be different from the fourth satellite coverage information carried by the NTN access network device in the broadcast information.

For example, the broadcast system information is not protected from tampering, the fourth satellite coverage information carried by the NTN access network device in the broadcast information could be easily tampered, so that the first satellite coverage information received by the UE may be inconsistent with the fourth satellite coverage information.

The core network device may include an AMF, etc. The core network device may obtain the second satellite coverage information. The core network device may be configured to obtain the second satellite coverage information in a way of being protected, to improve reliability of the second satellite coverage information.

In an embodiment, obtaining the second satellite coverage information by the core network device includes at least one of:
receiving, the core network device, the second satellite coverage information sent by the NTN access network device; or
obtaining, by the core network device, the second satellite coverage information, which is pre-stored, from an OAM network element.

The NTN access network device may carry the fourth satellite coverage information via an N2 message, and the core network device obtains the second satellite coverage information carried from the N2 message. Since the N2 message is a message being protected, there is a higher probability that the fourth satellite coverage information is consistent with the second satellite coverage information received by the core network device. Generally, it is considered that the fourth satellite coverage information is subject to security protection during transmission, for example, encryption protection and/or integrity protection, and the second satellite coverage information received by the core network device is consistent with the fourth satellite coverage information.

The second satellite coverage information may also be pre-stored in the OAM network element, so that the core network device can directly obtain the second satellite coverage information from the OAM network element. The second satellite coverage information may be pre-stored in the OAM network element by the NTN access network device or the like.

An event of performing the network registration by the UE may trigger the core network device to send a message carrying the second satellite coverage information to the UE.

The UE may send the registration request message to the NTN access network device to request the network registration. The NTN access network device may, based on the registration request message, request the core network device (such as an AMF, etc.) to register the UE to the core network, to perform communication activities. The core network may send the second satellite coverage information to the UE during the UE performing the network registration.

The core network device may carry the second satellite coverage information in a message transmitted in a secure transmission manner. The secure transmission manner may include transmitting the message by means of encryption protection and/or integrity protection, etc. The message carrying the second satellite coverage information is a message being protected, it may be considered that the second satellite coverage information has not been tampered during the transmission process, and the second satellite coverage information may be considered as real satellite coverage information.

For example, the core network device may carry the second satellite coverage information in a NAS message and send the NAS message to the UE during the registration process of the UE. Errors during the transmission of the second satellite coverage information may be reduced due to the NAS message being the message subjected to encryption protection and/or integrity protection.

The UE may compare the first satellite coverage information with the second satellite coverage information to determine whether the received first satellite coverage information is the real satellite coverage information.

The third satellite coverage information is determined based on whether the first satellite coverage information is the real satellite coverage information. For example, if the first satellite coverage information is the real satellite coverage information, the first satellite coverage information may be determined as the third satellite coverage information. If the first satellite coverage information is not the real satellite coverage information, the second satellite coverage information may be determined as the third satellite coverage information.

The UE may determine the location of the UE within the satellite coverage based on the third satellite coverage information, and then determine whether to perform data communication and/or whether to stop data communication, etc.

In this way, by comparing the first satellite coverage information with the second satellite coverage information obtained in the secure transmission manner, the UE determines whether the first satellite coverage information is correct, and then communicates with the NTN access network device based on the determined real third satellite coverage information of the satellite. Thus, communication security is improved, and a situation where the UE is misled to stop working while it is still in the actual network coverage resulted by incorrect satellite coverage information may be reduced, and a situation where the UE continues to send signals for accessing the network when it is already out of the actual network coverage, leading to unnecessary power consumptions, may be reduced.

In an embodiment, receiving the NAS message related to the network registration of the UE sent by the core network device includes:
receiving a registration accept message carrying the second satellite coverage information sent by the core network device.

For example, during a process of the network registration of the UE, firstly, the UE sends the registration request message to the network. The registration request message may include a NTN capability of the UE. After receiving the registration request message, the NTN access network device may broadcast the fourth satellite coverage information to the UE via broadcast information (such as, system information, e.g., SIB information). The fourth satellite coverage information in the broadcast information is usually unprotected.

The UE receives the broadcast information and obtains the first satellite coverage message carried in the broadcast information. The broadcast information is unprotected, thus the first satellite coverage message may be the same as or different from the fourth satellite coverage information. The UE may store the received first satellite coverage message.

In an embodiment, sending the fourth satellite coverage information to the core network device includes:
sending the registration request message carrying the fourth satellite coverage information to the core network device.

After receiving the registration request message, the NTN access network device selects an AMF and sends the registration request message to the AMF via an N2 message. Optionally, the NTN access network device may also carry the fourth satellite coverage information in the registration request message. As the N2 message is a message being protected, it is considered that the second satellite coverage information obtained by the AMF from the registration request message is consistent with the fourth satellite coverage information. The AMF may also obtain the second satellite coverage information from the OAM network element and stores the obtained second satellite coverage information.

During a process of performing a primary authentication between the UE and the network, NAS security between the UE and the AMF may be established. After successful authentication, the AMF sends the registration accept message to the UE. The registration accept message carries the second satellite coverage information stored by the AMF. Since the NAS message is subjected to security protection, the UE may receive the second satellite coverage information correctly.

By carrying the second satellite coverage information in the registration accept message, an accuracy of receiving the second satellite coverage information by the UE may be improved, and verification of the first satellite coverage information may be achieved.

In an embodiment, determining the third satellite coverage information to be adopted by the UE based on the first satellite coverage information and the second satellite coverage information includes one of:
in response to the first satellite coverage information being the same as the second satellite coverage information, determining the first satellite coverage information as the third satellite coverage information; or
in response to the first satellite coverage information being different from the second satellite coverage information, determining the second satellite coverage information as the third satellite coverage information.

For example, the UE compares the first satellite coverage information with the second satellite coverage information. If the first satellite coverage information is inconsistent with the second satellite coverage information, the UE may determine the second satellite coverage information as the third satellite coverage information. For example, the first satellite coverage information stored in the UE is cover with the second satellite coverage information. If the first satellite coverage information is consistent with the second satellite coverage information, the UE may determine the first satellite coverage information as the third satellite coverage information. For example, the first satellite coverage information may be reserved.

A specific example is provided below in combination with any of the above embodiments.

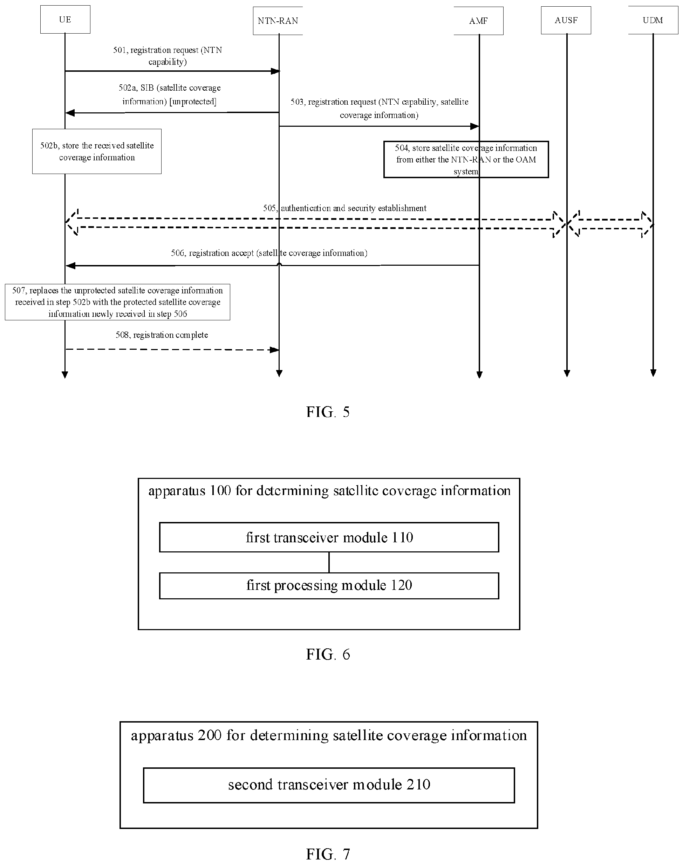

As illustrated in FIG. 5, specific steps for a UE to verify satellite coverage information obtained from broadcast information based on satellite coverage information provided by an AMF include following steps.

At step 501, the UE sends a registration request message to network, in which the registration request message includes an NTN capability of the UE.

At step 502a, an NTN-RAN (NTN access network device) sends satellite coverage information (fourth satellite coverage information) to the UE when broadcasting SIB information, in which the satellite coverage information (the fourth satellite coverage information) in the SIB information is unprotected. The satellite coverage information (the fourth satellite coverage information) may be configured on the NTN-RAN by an OAM system.

At step 502b, the UE stores received satellite coverage information (first satellite coverage information).

At step 503, the NTN-RAN selects an AMF and sends the registration request message to the AMF via an N2 message, in which the registration request message may further include the satellite coverage information (the fourth satellite coverage information).

At step 504, the AMF stores satellite coverage information (second satellite coverage information, which is usually considered to be with the same as the fourth satellite coverage information) from either the NTN-RAN or the OAM system.

At step 505, primary authentication between the UE and the network is performed, during which NAS security between the UE and the AMF is established.

At step 506, after successful authentication, the AMF sends a registration accept message to the UE in response to the registration request message, in which the registration accept message is an NAS message subject to security protection, and the registration accept message carries the satellite coverage information (the second satellite coverage information).

At step 507, the UE compares the satellite coverage information (the second satellite coverage information) sent in step 506 with the satellite coverage information (the first satellite coverage information) received in step 502b. If it is determined that they are inconsistent with each other, the UE replaces the unprotected satellite coverage information (the first satellite coverage information) received in step 502b with the protected satellite coverage information (the second satellite coverage information) newly received in step 506.

At step 508, the UE sends a registration complete message to the AMF.

The embodiment of the disclosure further provides an apparatus 100 for determining satellite coverage information. As illustrated in FIG. 6, the apparatus is applied to a UE of cellular mobile wireless communication. The apparatus 100 includes:
a first transceiver module 110, configured to receive broadcast information from a NTN access network device, in which the broadcast information carries first satellite coverage information;
the first transceiver module 110, further configured to send a registration request message for requesting network registration to the NTN access network device;
the first transceiver module 110, further configured to receive a NAS message related to the network registration of the UE sent by a core network device, in which the NAS message carries second satellite coverage information; and
a first processing module 120, configured to determine third satellite coverage information to be adopted by the UE based on the first satellite coverage information and the second satellite coverage information.

In an embodiment, the first transceiver module 110 is further configured to:
receive a registration accept message carrying the second satellite coverage information sent by the core network device.

In an embodiment, the first processing module 120 is further configured to:
in response to the first satellite coverage information being the same as the second satellite coverage information, determine the first satellite coverage information as the third satellite coverage information; or
in response to the first satellite coverage information being different from the second satellite coverage information, determine the second satellite coverage information as the third satellite coverage information.

An embodiment of the disclosure further provides an apparatus 200 for determining satellite coverage information. As illustrated in FIG. 7, the apparatus is applied to a core network device of cellular mobile wireless communication. The apparatus 200 includes:
a second transceiver module 210, configured to obtain second satellite coverage information; and
the second transceiver module 210, further configured to send to a user equipment (UE) a NAS message related to network registration of the UE, in which the NAS message carries the second satellite coverage information; the second satellite coverage information is used for the UE to compare with first satellite coverage information determined by the UE from broadcast information; third satellite coverage information to be adopted by the UE is determined based on a comparison result; and the network registration is triggered by a registration request message sent by the UE to a non-terrestrial network (NTN) access network device.

In an embodiment, the second transceiver module 210 is further configured to:
send to the UE a registration accept message carrying the second satellite coverage information.

In an embodiment, obtaining the second satellite coverage information includes at least one of:
receiving the second satellite coverage information sent by the NTN access network device; or
obtaining second satellite coverage information, which is pre-stored, from an OAM network element.

In an embodiment, the second transceiver module 210 is further configured to:
receive the registration request message carrying the second satellite coverage information from the NTN access network device.

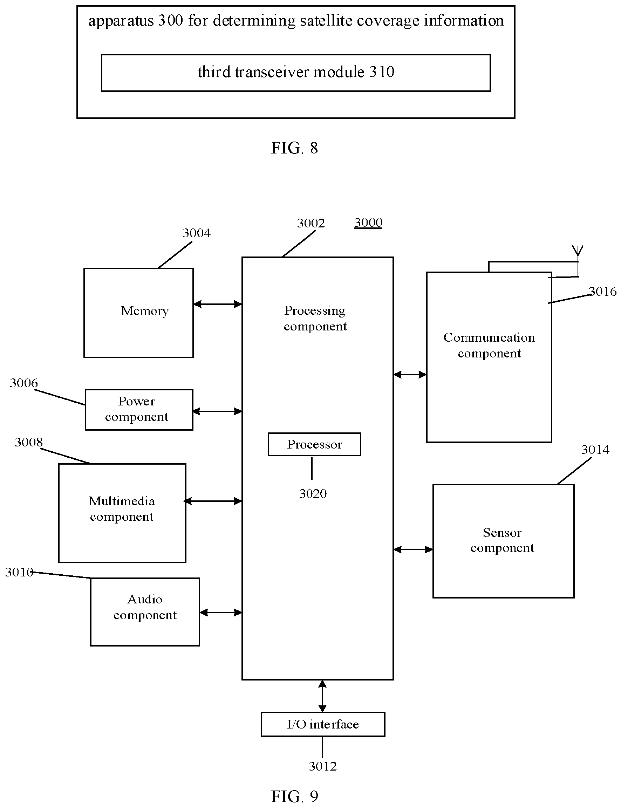

An embodiment of the disclosure further provides an apparatus 300 for determining satellite coverage information. As illustrated in FIG. 8, the apparatus is applied to an NTN access network device of cellular mobile wireless communication. The apparatus 300 includes:
a third transceiver module 310, configured to send broadcast information carrying fourth satellite coverage information to a UE, in which the satellite coverage information sent to the UE is used for the UE to determine first satellite coverage information;
the third transceiver module 310, further configured to receive a registration request message for requesting network registration sent by the UE; and
the third transceiver module 310, further configured to send the fourth satellite coverage information to a core network device, in which sending the fourth satellite coverage information to the core network device is used for the core network device to determine second satellite coverage information; the second satellite coverage information is carried in a NAS message related to the network registration of the UE and sent by the core network device to the UE, and is used for the UE to compare with the first satellite coverage information and to determine third satellite coverage information to be adopted by the UE based on a comparison result.

In an embodiment, the third transceiver module 310 is further configured to:
send the registration request message carrying the fourth satellite coverage information to the core network device.

In an exemplary embodiment, the first transceiver module 110, the first processing module 120, the second transceiver module 210 and the third transceiver module 310 can be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field-programmable gate arrays (FPGAs), general-purpose processors, controllers, micro controller units (MCUs), microprocessors, or other electronic components to execute the above methods.

FIG. 9 is a block diagram of a device 3000 used for determining satellite coverage information according to an embodiment. For example, the device 3000 may be a mobile phone, a computer, a digital broadcast terminal, a message transceiver device, a game console, a tablet device, a medical device, a fitness device or a personal digital assistant.

As illustrated in FIG. 9, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, telephone calls, data communications, camera operations, and recording operations. The processing component 3002 may include one or more processors 3020 to perform all or part of the steps in the above described methods. Moreover, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, video, etc. The memory 3004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 3008 includes a front-facing camera and/or a rear-facing camera. When the device 3000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 3010 is configured to output and/or input audio signals. For example, the audio component 3010 includes a microphone (MIC) configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a Complementary Metal Oxide Semiconductor (CMOS) or Charge-Coupled Device (CCD) image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 can access a wireless network based on a communication standard, such as Wi-Fi, 2G or 3G, or a combination thereof. In an exemplary embodiment, the communication component 3016 receives a broadcast signal or broadcast associated information from an external broadcast management system via a broadcast channel. In an exemplary embodiment, the communication component 3016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the device 3000 may be implemented with one or more ASICs, DSPs, Digital Signal Processing Devices (DSPDs), PLDs, FPGAs, controllers, micro-controllers, microprocessors or other electronic components, for performing the above described methods.

In some exemplary embodiments, there is also provided a non-transitory computer readable storage medium including instructions, such as the memory 3004, executable by the processor 3020 in the device 3000, for performing the above methods. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A method for determining satellite coverage information, performed by a user equipment (UE), comprising:
receiving broadcast information from a non-terrestrial network (NTN) access network device, wherein the broadcast information carries first satellite coverage information;
sending a registration request message for requesting network registration to the NTN access network device;
receiving a non-access stratum (NAS) message related to the network registration of the UE sent by a core network device, wherein the NAS message carries second satellite coverage information; and
determining third satellite coverage information to be adopted by the UE based on the first satellite coverage information and the second satellite coverage information.

2. The method of claim 1, wherein receiving the NAS message related to the network registration of the UE sent by the core network device comprises:
receiving a registration accept message carrying the second satellite coverage information sent by the core network device.

3. The method of claim 1 or 2, wherein determining the third satellite coverage information to be adopted by the UE based on the first satellite coverage information and the second satellite coverage information comprises one of:
in response to the first satellite coverage information being the same as the second satellite coverage information, determining the first satellite coverage information as the third satellite coverage information; or
in response to the first satellite coverage information being different from the second satellite coverage information, determining the second satellite coverage information as the third satellite coverage information.

4. A method for determining satellite coverage information, performed by a core network device, comprising:
obtaining second satellite coverage information; and
sending to a user equipment (UE) a non-access stratum (NAS) message related to network registration of the UE, wherein the NAS message carries the second satellite coverage information, the second satellite coverage information is used for the UE to compare with first satellite coverage information determined by the UE from broadcast information, and to determined third satellite coverage information to be adopted by the UE based on a comparison result, and the network registration is triggered by a registration request message sent by the UE to a non-terrestrial network (NTN) access network device.

5. The method of claim 4, wherein sending to the UE the NAS message related to the network registration of the UE comprises:
sending to the UE a registration accept message carrying the second satellite coverage information.

6. The method of claim 4, wherein obtaining the second satellite coverage information comprises at least one of:
receiving the second satellite coverage information sent by the NTN access network device; or
obtaining the second satellite coverage information, which is pre-stored, from an operation administration and maintenance (OAM) network element.

7. The method of claim 6, wherein receiving the second satellite coverage information sent by the NTN access network device comprises:
receiving the registration request message carrying the second satellite coverage information from the NTN access network device.

8. A method for determining satellite coverage information, performed by a non-terrestrial network (NTN) access network device, comprising:
sending broadcast information carrying fourth satellite coverage information to a user equipment (UE), wherein the satellite coverage information sent to the UE is used for the UE to determine first satellite coverage information;
receiving a registration request message for requesting network registration sent by the UE; and
sending the fourth satellite coverage information to a core network device, wherein sending the fourth satellite coverage information to the core network device is used for the core network device to determine second satellite coverage information, the second satellite coverage information is carried in a non-access stratum (NAS) message related to the network registration of the UE and sent by the core network device to the UE, and is used for the UE to compare with the first satellite coverage information and to determine third satellite coverage information to be adopted by the UE based on a comparison result.

9. The method of claim 8, wherein sending the fourth satellite coverage information to the core network device comprises:
sending the registration request message carrying the fourth satellite coverage information to the core network device.

10. An apparatus for determining satellite coverage information, comprising:
a first transceiver module, configured to receive broadcast information from a non-terrestrial network (NTN) access network device, wherein the broadcast information carries first satellite coverage information;
the first transceiver module, further configured to send a registration request message for requesting network registration to the NTN access network device;
the first transceiver module, further configured to receive a non-access stratum (NAS) message related to the network registration of the UE sent by a core network device, wherein the NAS message carries second satellite coverage information; and
a first processing module, configured to determine third satellite coverage information to be adopted by the UE based on the first satellite coverage information and the second satellite coverage information.

11. The apparatus of claim 10, wherein the first transceiver module is further configured to:
receive a registration accept message carrying the second satellite coverage information sent by the core network device.

12. The apparatus of claim 10 or 11, wherein the first processing module is further configured to:
in response to the first satellite coverage information being the same as the second satellite coverage information, determine the first satellite coverage information as the third satellite coverage information; or
in response to the first satellite coverage information being different from the second satellite coverage information, determine the second satellite coverage information as the third satellite coverage information.

13. An apparatus for determining satellite coverage information, comprising:
a second transceiver module, configured to obtain second satellite coverage information; and
the second transceiver module, further configured to send to a user equipment (UE) a non-access stratum (NAS) message related to network registration of the UE, wherein the NAS message carries the second satellite coverage information; the second satellite coverage information is used for the UE to compare with first satellite coverage information determined by the UE from broadcast information; third satellite coverage information to be adopted by the UE is determined based on a comparison result; and the network registration is triggered by a registration request message sent by the UE to a non-terrestrial network (NTN) access network device.

14. The apparatus of claim 13, wherein the second transceiver module is further configured to:
send to the UE a registration accept message carrying the second satellite coverage information.

15. The apparatus of claim 13, wherein obtaining the second satellite coverage information comprises at least one of:
receiving the second satellite coverage information sent by the NTN access network device; or
obtaining the second satellite coverage information, which is pre-stored, from an operation administration and maintenance (OAM) network element.

16. The apparatus of claim 15, wherein the second transceiver module is further configured to:
receive the registration request message carrying the second satellite coverage information from the NTN access network device.

17. An apparatus for determining satellite coverage information, comprising:
a third transceiver module, configured to send broadcast information carrying fourth satellite coverage information to a user equipment (UE), wherein the satellite coverage information sent to the UE is used for the UE to determine first satellite coverage information;
wherein the third transceiver module is further configured to receive a registration request message for requesting network registration sent by the UE; and
the third transceiver module is further configured to send the fourth satellite coverage information to a core network device, wherein sending the fourth satellite coverage information to the core network device is used for the core network device to determine second satellite coverage information; the second satellite coverage information is carried in a non-access stratum (NAS) message related to the network registration of the UE and sent by the core network device to the UE, and is used for the UE to compare with the first satellite coverage information and to determine third satellite coverage information to be adopted by the UE based on a comparison result.

18. The apparatus of claim 17, wherein the third transceiver module is further configured to:
send the registration request message carrying the fourth satellite coverage information to the core network device.

19. A communication device, comprising a processor, a memory and an executable program stored in the memory and capable of being run by the processor, wherein when the executable program is executed by the processor, steps of the method for determining satellite coverage information as described in any one of claims 1-3, or any one of claims 4-7, or claim 8 or 9 are implemented.

20. A storage medium having an executable program stored thereon, wherein when the executable program is executed by a processor, steps of the method for determining satellite coverage information as described in any one of claims 1-3, or any one of claims 4-7, or claim 8 or 9 are implemented.
